(19) **Europäisches Patentamt**

**European Patent Office**

**Office européen des brevets**

(11) Publication number: **0 567 675 B1**

## EUROPEAN PATENT SPECIFICATION

(45) Date of publication of patent specification: **13.12.95**   (51) Int. Cl.6: **G01C 19/28**

(21) Application number: **92107286.4**

(22) Date of filing: **29.04.92**

(54) **Pick-off device for a mechanical spinning gyroscope**

(43) Date of publication of application:
**03.11.93 Bulletin 93/44**

(45) Publication of the grant of the patent:
**13.12.95 Bulletin 95/50**

(84) Designated Contracting States:
**DE ES FR GB IT NL SE**

(56) References cited:
**EP-A- 0 059 628**

**SCIENTIFIC HONEYWELLER, vol. 7, no. 1, 1986, Minneapolis, MN, US, pp. 15-22; H. DINTER : 'How Honeywell Began to Make Inertial Components andSystems'**

(73) Proprietor: **HONEYWELL AG**
**Kaiserleistrasse 39**
**D-63067 Offenbach (DE)**

(72) Inventor: **Bulmer, Geoffrey J.**
**Wilhelm-Hauff-Strasse 6**
**W-6454 Bruchköbel 3 (DE)**

(74) Representative: **Herzbach, Dieter, Dipl.-Ing. et al**
**Honeywell Holding AG**
**Patent- und Lizenzabteilung**
**Postfach 10 08 65**
**D-63008 Offenbach (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a pick-off device according to the preamble of claim 1.

In order to detect an angular displacement of a rotatable member of a gyroscope and restoring the member to a reference position, signal pick-off and torque generating systems are known in the prior art which mostly rely on electromagnetical sensing and driving means.

In Scientific Honeyweller, volume 7, no. 1, 1986, pages 15 - 22, a spring-restrained gyroscope is shown where a rotor is mounted in a gimbal, and the gimbal is restrained by springs against a housing.

Furthermore, EP-A-0 059 628 shows a pick-off device for a mechanical spinning gyroscope according to the preamble of claim 1 where in addition to a spring piezo-electric crystals are arranged in order to produce an electrical signal in response to relative angular motion between a rotor-supporting gimbal and a housing.

Departing from those prior art devices, it is the object of the present invention to devise a pick-off device which delivers a very fast and accurate response.

This object is achieved according to the characterizing features of claim 1. Further advantageous embodiments of the inventive pick-off device may be taken from the dependent claims.

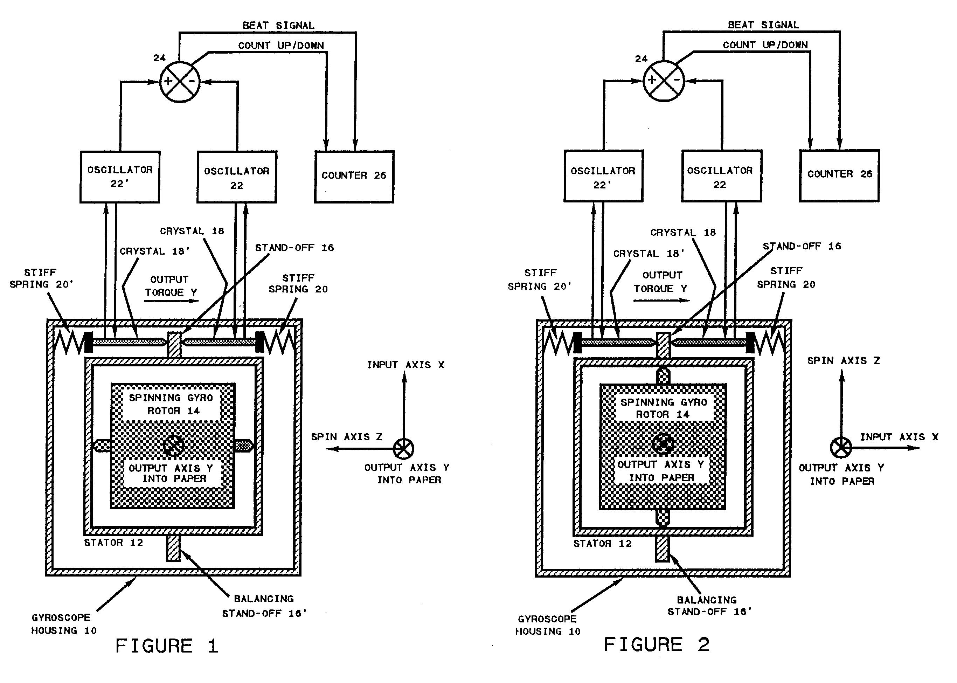

Figures 1 and 2 of the attached drawing show two possible arrangements of the pick-off system. With respect to these figures an embodiment of the inventive pick-off device shall be further described.

Within a gyroscope housing 10 a stator 12 is mounted for instance by a first not-shown gimbal ring and is rotatable about an output axis y, which is normal to the drawing plane. Within said stator 12 a rotor 14 is rotatable about its spin axis z. The stator 12 is provided with a symmetrically arranged stand-off 16.

On both sides of said stand-off 16 between said stand-off 16 and the gyroscope housing 10, an oscillator crystal (e.g. piezo-electric crystal) 18, 18' and a stiff spring 20, 20' is arranged. A further stand-off 16' is arranged just opposite of the first-mentioned stand-off 16 and only is arranged for balancing purposes.

As may be taken from this arrangment, at any time when a rotation occurs about the input axis x, which is normal to the spin axis z and to the output axis y, this rotation results in an increased compression of the one piezo-electric crystal 18 and in a reduced compression of the other piezo-electric crystal 18'.

Since the crystals 18, 18' are operated by oscillators 22, 22' or form part of such oscillators, respectively, as frequency determining elements, the resonant frequency of such oscillators will change as a function of the experienced compression or relaxation, respectively. The frequency of the oscillators 22, 22' is fed to a difference-forming means 24 delivering a beat signal and a count direction signal to an up/down counter 26 delivering a quantized incremental output count representative of the rotated angle. Alternatively, the output of the difference forming means could deliver quadrature electrical output signals which could be fed into counter circuits to indicated positive and negative angular rotation.

Below a somewhat mathematical explanation of the principle of operation shall be given:

The spinning rotor gyroscope has the same characteristics as any rotating gyroscope. Since the gyroscope stator has one single axis of rotation within the gyroscope housing which is about the output axis (y), it will receive a torque-momentum transfer from the rotor along this output axis whenever the rotor experiences a rotation. The torque-momentum transfer in the output (y) axis will be equal to:

$$T(y) \; = \; J(y) \cdot w'(y) \; + \; [J(x)-J(z)] \cdot w(z) \cdot w(x) \; - \; w(x) \cdot J(r) \cdot w(r)$$

where:

x is the input axis (most sensitive axis);

y is the output axis;

z is the rotor axis;

J(x), J(y) and J(z) are the moments of inertia of the stator assembly about axes x, y and z;

w(x), w(y) and w(z) are the angular rates of the stator about axes x, y and z;

w'(y) is the angular acceleration about the y axis;

w(r) is the angular rate of the rotor relative to the stator;

J(r) is the moment of inertia of the rotor about the spin axis.

For simplification of the explanation of operation we can assume w(r) to be very much larger than the other angular rates giving the approximate relationship:

$$T(y) \; = \; -w(x) \cdot J(r) \cdot w(r)$$

By maintaining a constant angular rotation of the rotor, the output torque about the y axis will be directly proportional to the input angular rate w(x). Thus, by sensing and measuring the torque about the output (y) axis, rotation about the input (x) axis can be computed if J(r) and w(r) are known.

In the gyroscope described here a positive torque about the y axis will apply a positive force on crystal 18 and a negative force on crystal 18'. Since both crystals are permanently compressed by the two springs 20, 20', a positive force produces an increase in compression; a negative force produces a reduction in compression as far as crystal 18 is concerned. With respect to crystal 18', the opposite is true.

By choosing suitable crystals (e.g. piezo crystals) which have very high resonant oscillating frequencies (e.g. 300 MHz) a very fast response to a change in compression caused by an impressed torque can be achieved if the resonant frequency can be changed by this change in compression. By subtracting one resonant frequency from the other, a beat frequency can be generated which will change proportional to changes in torque. For zero torque any residual frequency can be considered a bias due to slight differences in crystals.

By counting beat-oscillations, true angular quantum changes can be counted. The gyroscope therefore outputs a signal in the form of an oscillation or pulses where one oscillation (or pulse) is equal to a constant amount of angular rotation about the input axis x.

The gyroscope according to the invention, therefore, shows the following advantageous characteristics:

1. Data is collected as angular increments and not as angular rates.
2. The gyroscope requires no torquing electronics.
3. The gyroscope is a true "strapdown" sensor.
4. The gyroscope is mechanically very stable since it has no free movement.
5. Temperature effects are minimized since crystal characteristics change together.
6. The gyroscope is capable of operating at very high angular rates.
7. By changing the size of the crystals, the resolution of the gyroscope output can be changed without changing the physical size of the gyroscope.

**Claims**

1. Pick-off device for a mechanical spinning gyroscope comprising:

   a spinning rotor (14) having a spin axis (z);

   a stator (12) supporting said spinning rotor (14) and being rotatable about an output axis (y) when the gyroscope experiences a rotation about an input axis (x) being normal to the sping axis (z) and the output axis (y);

   a housing (10) supporting said stator;

   means for a gimbal suspension of said rotor and stator within said housing, with said suspension means comprising:

   piezoelectric crystals (18, 18') and stiff spring means (20, 20') connected to each other and arranged between said stator (12) and said housing (10) for caging the stator (12) against the housing (10), **characterized by:**

   each piezoelectric crystal (18, 18') being arranged to operate as part of an oscillator (22, 22') with the oscillating frequency being changed by the torque impressed to the piezoelectric crystals and by difference-forming means (24) for receiving the oscillating frequency and for providing a difference evaluation of both oscillations in order to generate a beat signal.

2. Device according to claim 1, **characterized in that** an up/down counter (26) is provided to which said beat signal is fed.

3. Device according to claim 1, **characterized in that** said spring means comprises two stiff springs (20, 20') with each spring together with one piezoelectric crystal (18, 18') being arranged side-by-side between a stand-off (16) projecting from said stator (12) and said housing (10).

4. Device according to claim 3, **characterized by** a balancing stand-off (16') just opposite to said supporting stand-off (16).

**Patentansprüche**

1. Abgriffeinrichtung für einen sich mechanisch drehenden Kreisel, aufweisend:

   einen sich drehenden Rotor (14) mit einer Drehachse (z);

ein den sich drehenden Rotor (14) abstützender Stator (12), der um eine Ausgangsachse (y) drehbar ist, wenn der Kreisel eine Drehung um eine Eingangsachse (x) erfährt, die senkrecht zu der Drehachse (z) und der Ausgangsachse (y) ist;

ein den Stator abstützendes Gehäuse (10);

eine Einrichtung zur Kardanaufhängung des Rotors und Stators in dem Gehäuse, wobei die Aufhängeeinrichtung umfaßt:

piezoelektrische Kristalle (18, 18') und steife Federeinrichtungen (20, 20'), die miteinander verbunden sind und zwischen dem Stator (12) und dem Gehäuse (10) angeordnet sind, um den Stator (12) gegenüber dem Gehäuse (10) zu fesseln,

**gekennzeichnet dadurch,**

daß jeder piezoelektrische Kristall (18, 18') angeordnet ist, um als Teil eines Oszillators (22, 22') zu arbeiten, wobei die Oszillationsfrequenz durch das Drehmoment geändert wird, das den piezoelektrischen Kristallen aufgeprägt wird und durch eine differenzbildende Einrichtung (24) zum Empfang der Oszillationsfrequenzen und zur Vorgabe einer Differenzauswertung beider Oszillationen, um ein Schwebungssignal zu erzeugen.

2. Einrichtung nach Anspruch 1, **dadurch gekennzeichnet,** daß ein Auf/Abwärtszähler (26) vorgesehen ist, dem das Schwebungssignal zugeführt wird.

3. Einrichtung nach Anspruch 1, **dadurch gekennzeichnet,** daß die Federeinrichtung zwei steife Federn (20, 20') umfaßt, wobei jede Feder zusammen mit einem piezoelektrischen Kristall (18, 18') Seite an Seite zwischen einem von dem Stator (12) hervorstehenden Ständer (16) und dem Gehäuse (10) angeordnet ist.

4. Einrichtung nach Anspruch 3, **gekennzeichnet durch** einen Ausgleichsständer (16') unmittelbar gegenüber dem abstützenden Ständer (16).

**Revendications**

1. Dispositif de mesure de déplacement angulaire pour un gyroscope mécanique à rotation rapide comprenant:

un rotor à rotation rapide (14) disposant d'un axe de rotation (z);

un stator (12) supportant ledit rotor à rotation rapide (14) et pouvant tourner autour d'un axe de sortie (y) lorsque le gyroscope subit une rotation autour d'un axe d'entrée (x) qui est normal à l'axe de rotation (z) et à l'axe de sortie (y);

un boîtier (10) supportant ledit stator;

un moyen de suspension à joint universel desdits rotor et stator à l'intérieur dudit boîtier, ledit moyen de suspension comprenant:

des cristaux piézo-électriques (18, 18') et des moyens ressorts rigides (20, 20') reliés l'un à l'autre et disposés entre ledit stator (12) et ledit boîtier (10) afin de bloquer le stator (12) contre le boîtier (10), caractérisé en ce que:

Chaque cristal piézo-électrique (18, 18') est disposé de façon à fonctionner comme une partie d'un oscillateur (22, 22') dont la fréquence d'oscillation est modifiée par le couple exercé sur les cristaux piézo-électriques, et en ce qu'il est prévu un moyen de formation de différence (24) afin de recevoir la fréquence d'oscillation et de délivrer l'évaluation de la différence des deux fréquences d'oscillations dans le but de produire un signal de battement.

2. Dispositif selon la revendication 1, caractérisé en ce qu'un compteur/décompteur (26) est prévu là où ledit signal de battement est délivré.

3. Dispositif selon la revendication 1, caractérisé en ce que lesdits moyens ressorts comprennent deux ressorts rigides (20, 20') chaque ressort associé avec un cristal piézo-électrique (18, 18') étant disposé côte à côte entre un séparateur (16) en saillie par rapport audit stator (12) et audit boîtier (10).

4. Dispositif selon la revendication 3, caractérisé en ce qu'il est prévu un séparateur d'équilibrage (16') situé juste à l'opposé dudit séparateur support (16).

FIGURE 1

FIGURE 2